(19) Europäisches Patentamt
European Patent Office
Office européen des brevets

(11) **EP 1 011 215 A2**

(12) **EUROPEAN PATENT APPLICATION**

(43) Date of publication:
21.06.2000 Bulletin 2000/25

(51) Int. Cl.$^7$: **H04B 10/155**

(21) Application number: **99310115.3**

(22) Date of filing: **15.12.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.12.1998 US 112480**
**03.11.1999 US 432936**

(71) Applicant:
**LUCENT TECHNOLOGIES INC.**
**Murray Hill, New Jersey 07974-0636 (US)**

(72) Inventors:
• **Chand, Naresh**
**Berkeley Heights, New Jersey 07922 (US)**
• **Daugherty, Thomas Henry**
**Succasunna, New Jersey 07876 (US)**
• **Magill, Peter D.**
**Freehold, New Jersey 07728 (US)**
• **Swaminathan, Venkataraman**
**Bridgewater, New Jersey 08807 (US)**

(74) Representative:
**Watts, Christopher Malcolm Kelway, Dr. et al**
**Lucent Technologies (UK) Ltd,**
**5 Mornington Road**
**Woodford Green Essex, IG8 0TU (GB)**

(54) **Optical communication system combining both baseband and passband signals**

(57) This invention is a new communication system in which multichannel broadcast digital services are distributed to each user with the broadcast video signal riding in the passband above a digital baseband signal. The system can deliver more than 1 Gbps additional bandwidth to each subscriber. The passband bandwidth will accommodate growth in downstream services including video on demand, higher speed web downloads including improved streaming audio and video, HDTV, interactive video, and personalized video. The invention requires only a single transmitter, a single transmission fiber and a single receiver for each user. A single transmitter, single fiber, single receiver system is much less expensive than two systems, one transmitting baseband and the other passband. A single receiver is greatly cost beneficial to achieving an economical fiber to the home solution where equipment at the end user location is not shared among multiple end users.

In an exemplary embodiment, an optical communication system comprises a diplexer for electronically combining the baseband and passband signals, a digital laser transmitter for generating an optical signal containing the combined signals, a length of optical transmission fiber for transmitting the optical signal, and, for each user or group of users, an optical receiver coupled to the fiber.

FIG. 3

EP 1 011 215 A2

**Description**

**FIELD OF THE INVENTION**

This invention relates to optical communication systems and, in particular, to an optical communication system which transmits born baseband signals and passband signals over a common optical fiber.

**BACKGROUND OF THE INVENTION**

An ever increasing communication need of today is to deliver multimedia services such as voice, data, high speed internet access, video conferencing, video on demand, and broadcast television video to small businesses and residences. Cost is the prominent issue for the deployment of such networks. Among various technologies that are currently available and being deployed, optical fiber extending to users -- Fiber to the Home (FTTH) -- is the preferred technology to meet present and future needs. Service providers are taking fiber as deep into their networks as their costs allow.

Two different optical fiber communication systems have evolved for carrying information to homes and businesses. One system delivers information by a digitally modulated series of light pulses. These are referred to as baseband signals. A second system uses a plurality of frequency separated carriers. Each carrier is modulated to transmit a higher order digital signal. These are passband signals. Each system has its own specialized equipment, its own physical plant and its own standards.

Fig. 1A schematically illustrates a baseband system 10 comprising a central office 11 providing optical fiber connections to a plurality of homes 12 and businesses 13. High power optical signals at single or multiple wavelengths are transmitted over a plurality of access fibers 15A, 15B, 15C to respective optical power splitters and/or wavelength demultiplexers 16A, 16B, 16C, and at each power splitter or demultiplexer, e.g., 16B, the high power signal is divided into a plurality of lower power or separate wavelength signals and transmitted over a respective plurality of end user fibers 17A and 17B. These signals are called downstream signals. The downstream signals are typically a digitally modulated baseband series of light pulses centered in the 1.3 - 1.6 μm wavelength band. Signals from the end users to the central office, called upstream signals, are typically digitally modulated baseband pulses in the same 1.3 - 1.6 wavelength band but at different wavelength from the downstream wavelength are transmitted in the reverse direction over the same fibers. The upstream signals can be buffered and time division multiplexed for burst transmission at the power splitters, e.g., 16B. Since this system does not employ any active electronic or photonic component between the central office and the users, it is called a Passive Optical Network (PON).

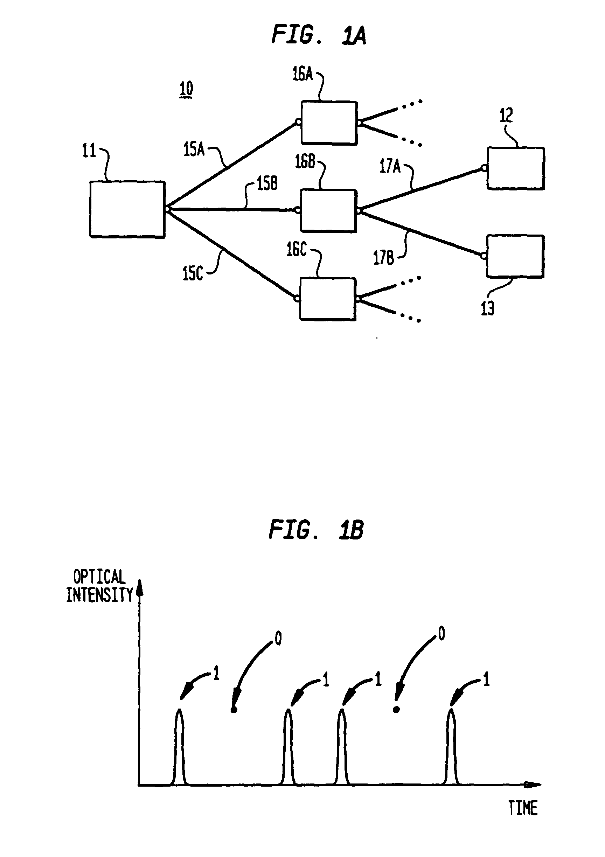

Fig. 1B illustrates a simplified baseband modulation scheme. Typically a digital 1 is represented by a light pulse in the series. A digital 0, by the absence of a pulse in a pulse position. Alternatively, the signal can be inverted with a pulse representing digital 0 and its absence representing 1.

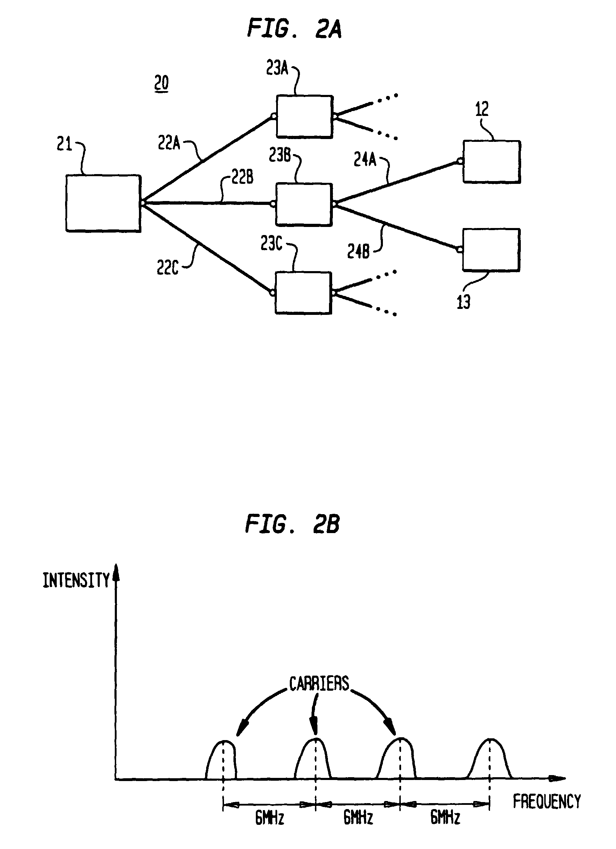

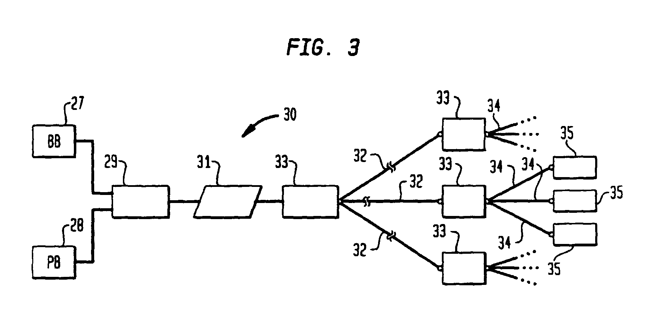

Fig. 2A schematically illustrates a passband system 20 comprising a hub 21, and a plurality of fibers 22A, 226, 22C connecting the hub to a respective plurality of fiber nodes 23A, 236 and 23C. Each node is connected, as by a plurality of fibers or coaxial cables 24A and 248 to a plurality of homes 12 and businesses 13.

Fig. 2B illustrates the radio frequency spectrum of a typical digitally modulated passband signal. The signal comprises a plurality of different radio frequency (RF) carriers spaced apart in frequency (e.g. 6 MHz spacing in the NTSC system). Each of the carriers is modulated among a plurality of states to carry a higher order digital signal to encode plural bits for each modulation state. The modulation can be amplitude modulation, frequency modulation, phase modulation or a combination of them.

Digital passband signals are conventionally transmitted using two RF carriers that are frequency locked but 90 degrees out of phase. The two carriers are said to be in quadrature. The two carriers are separately amplitude modulated (AM), and the modulated carriers are combined to form a single RF output having both amplitude information corresponding to their vector sum and phase information corresponding to their vector angle. The technique is known as quadrature amplitude modulation or QAM.

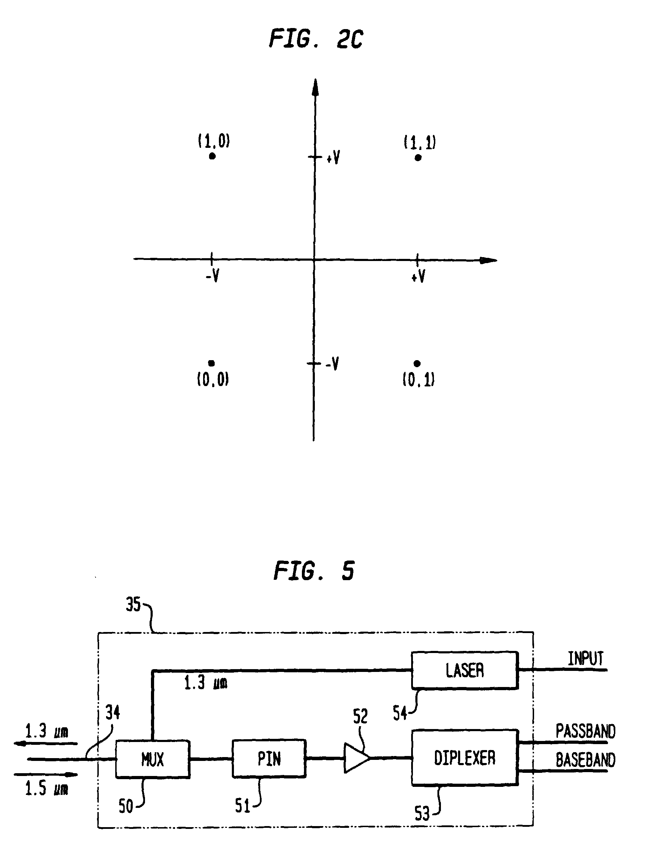

Fig. 2C illustrates the simplest case of QAM which occurs when each of the carriers has only two states (e.g. +V and -V). One carrier, is considered the reference carrier and is called the in-phase channel. It's amplitude is represented along the vertical axis of Fig. 2(C). The other carrier, 90° out of phase, is called the quadrature channel. Its amplitude is represented along the horizontal axis. As can be seen from the diagram, if each carrier has two states (+V, -V), then there are four possible combined outputs, each of which can represent two bits of information: (0,0), (0,1), (1,0), (1,1). This simple modulation scheme is known as quadrature phase shift keying (QPSK).

Similar modulation schemes can be based on amplitude modulation of the carriers among a larger number of states. For example if both carriers can be modulated among four amplitudes, the combined output can represent 4 x 4 = 16 states, and the modulation is called 16 QAM modulation. Modulation using 8 x 8 = 64 states is 64 QAM.

In the past few years there has been an international effort from service providers and system manufacturers to define common specifications aimed at the extension of fiber all the way to homes and businesses to deliver existing and future services. These specifications are now part of International Telecommunication Union (ITU) standard G.983.1

According to G.983.1, all services are transported in baseband format in both the upstream and downstream directions on a power splitter-based system. In one variant of the network, a shared 155-Mbps baseband signal is transported downstream in the 1.5-μm band and the same bit rate is sent upstream in the 1.3-μm band on a single fiber. For low cost, a single transmitter in the central office and a single fiber can serve up to 32 users if the fiber is all the way to the user's premises. The number of users can even be greater if the receiver is at the curb and electrical signals are distributed to multiple dwellings. The G.983.1 specification calls for a minimum logical reach of at least 20 km and an optical power budget consistent with that reach. The specified downstream receiver sensitivity at a bit error ratio of $<10^{10}$ is -30 dBm for Class B operation and -33 dBm for Class C.

A downstream capacity of 155 Mbps shared among 32 end users is more than adequate for interactive services such as voice, data, or interactive video, but can be quickly exhausted by multichannel broadcast video, especially if high definition TV (HDTV) is to be delivered. One approach to dealing with broadcast video delivery in G983.1 is to increase the downstream bandwidth from 155 to 622 Mbps. This approach is very expensive and complicates video channel switching. Alternatively video signals can be delivered on a separate fiber using a separate transmitter and a separate receiver. This approach is even more expensive. Accordingly there is a need for a new approach to deliver multimedia services to small businesses and residences.

## SUMMARY OF THE INVENTION

This invention is a new communication system in which multichannel broadcast digital services are distributed to each user with the broadcast video signal riding in the passband above a digital baseband 155-Mbps signal. The system can deliver more than 1 Gbps additional bandwidth to each subscriber. The passband bandwidth will accommodate growth in downstream services including video on demand, higher speed web downloads including improved streaming audio and video, HDTV, interactive video, and personalized video. The invention requires only a single transmitter, a single transmission fiber and a single optical receiver for each user or group of users . A single transmitter, single fiber, single optical receiver system is much less expensive than two systems, one transmitting baseband and the other passband. A single receiver is greatly cost beneficial to achieving economical fiber to the home.

Although the result of the invention is to add digital video and other bandwidth demanding services on the system described in G983.1, it can also be used in other architectures where specifications or requirements differ from G983.1. For example, upstream or downstream data rate and optical wavelengths and the required receiver sensitivity and bit error rates may be different. The invention can also be used in point to point transmission of baseband and passband signals on a single fiber using single transmitter and receiver. Furthermore, the optical receiver or ONT does not have to be at the customer premises. It can be outside on the curb and from where baseband and passband services can be delivered to subscribers sharing that ONT on twisted copper wires or coaxial cables, in an architecture popularly known as Fiber to the Curb (FTTC). For twisted copper wires, the services can be delivered using any of the conventional digital subscriber line techniques. For coaxial lines, hybrid fiber coaxial (HFC) technology is used.

In an exemplary embodiment, an optical communication system comprises a diplexer for electronically combining the baseband and passband signals, a digital laser transmitter for generating an optical signal containing the combined signals, a length of optical transmission fiber for transmitting the optical signal, and, for each user or group of users, an optical receiver optically coupled to the fiber.

## BRIEF DESCRIPTION OF THE DRAWINGS

The advantages, nature and various additional features of the invention will appear more fully upon consideration of the illustrative embodiments described in connection with the accompanying drawings. In the drawings:

Figs. 1A and 1B illustrate features of a baseband communication system;

Figs. 2A, 2B and 2C illustrate features of a passband communication system;

Fig. 3 is a schematic block diagram of an optical communication system combining both baseband and passband signals;

Figs. 4A, 4B and 4C are interrelated graphical representations useful in explaining the operation of the transmitter in the system of Fig. 3.

Fig. 5 is a schematic diagram of an end user receiver for the system of Fig. 3;

Fig. 6 is a diagram of a test system combining both baseband and passband signals; and

Figs. 7-12 are graphical illustrations showing the results of tests using the system of Fig. 6.

It is to be understood that these drawings are for purposes of illustrating the concepts of the invention and, except for the graphs, are not to scale.

## _DETAILED DESCRIPTION_

Figures 1 and 2, which relate to conventional baseband and conventional passband systems were described in the Background of the Invention.

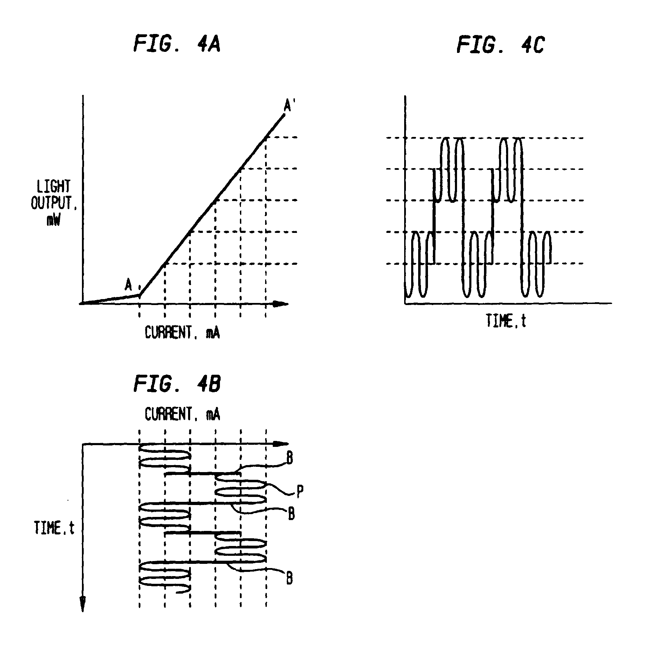

Fig. 3 is a schematic block diagram of an exemplary optical communication system 30 for transmitting both baseband signals and passband signals on one or more common optical transmission fibers 32. In essence, the system 30 comprises an electrical combiner such as a diplexer 29 which receives an electrical baseband signal from a baseband source 27 and an electrical passband signal from a passband source 28. The diplexer 29 combines these signals in such a manner that there is no frequency overlapping of baseband and passband signals. It produces a combined electrical output signal containing the information of both input signals and presents this combined electrical signal to a laser transmitter 31, preferably a semiconductor digital laser such as a distributed feedback (DFB) laser.

The transmitter 31 generates an optical output signal containing the information of both the input baseband and the input passband. The optical output signal is transmitted on one or more optical transmission fibers 32 to the inputs of one or more optical power splitters 33. Each power splitter 33 essentially splits the transmitted signal into a plurality of spectrally similar optical signals (which may be of lower optical power) and outputs these similar signals onto a plurality of end user fibers 34 for transmission to respective optical receivers 35 either at the premises of end users or nearby (at the curb). At least one optical receiver 35 can detect and demodulate both the baseband signals and the passband signals impressed on the incoming light. Thus a single transmitter, single fiber path and a single optical receiver can service a single user (FTTH) or group of users (FTTC).

Figs. 4A, 4B and 4C are interrelated graphical representations useful in explaining the operation of the transmitter 31 in the system of Fig. 3. Fig. 3A is a qualitative graph of the light output versus current characteristic of the laser. This characteristic includes a linear region A-A' where the light output is proportional to the current input.

Fig. 4B is a qualitative graph of the current produced as a function of time for the combined signal from the diplexer 29. The baseband signals B are identifiable as abrupt current changes at a constant repetition rate. The passband signals P are lower amplitude oscillations between baseband changes. The laser transmitter 31 should be biased, as shown in Fig. 4A so that the range of currents produced by the combined signal falls within the linear region A-A' of the laser.

Fig. 4C qualitatively illustrates the response of laser transmitter 31 to current produced by the combined signal from the diplexer 29. As can be seen, the light output scales the current input.

It is contemplated that the transmitter 31 will be located at a central office and the end-user receivers 35 may advantageously include local optical transmitters for transmitting information upstream from the end-user to the central office, in a manner similar to that used in conventional baseband systems.

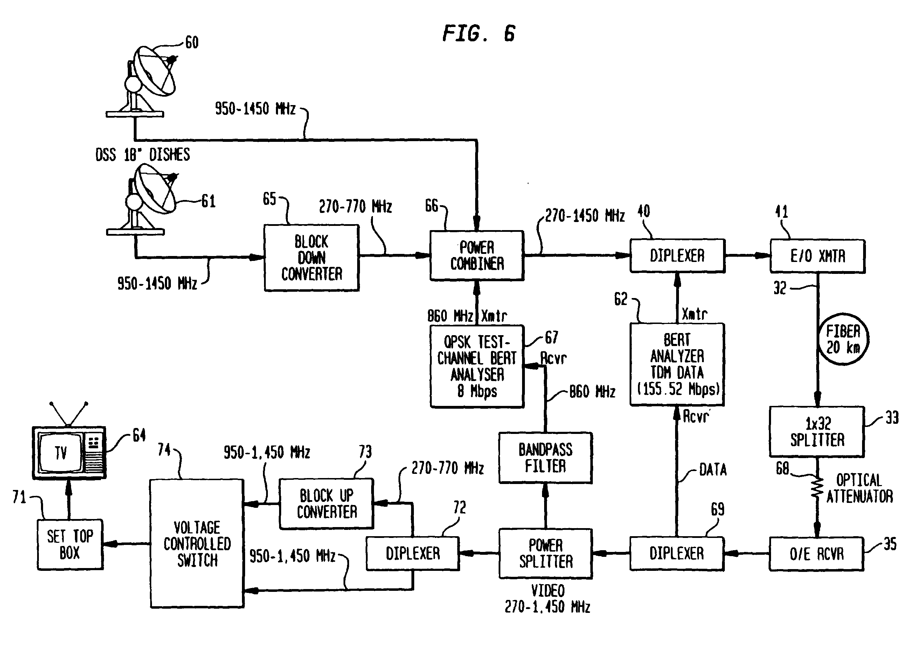

Fig. 5 schematically illustrates an advantageous optical receiving arrangement 35 for end users. The arrangement comprises an optical multiplexer 50 for receiving the transmitted combined optical signal from an end user fiber 34. The combined signal is applied to a receiving element 51, such as a PIN diode, and the resulting combined electrical signal is fed into a preamplifier 52. The preamplifled combined electrical signal is then split by diplexer 53 into its baseband portion and its passband portion.

In one embodiment of the system 30, the baseband signal is a digitally modulated time division multiplexed (TDM) 155 Mbps baseband signal conforming to the power budgets and other specifications of the ITU industry standard G.983.1. The passband signal is a quadrature phase-shift keying (QPSK) frequency division multiplexed (FDM) greater than 1 Gbps passband signal. The optical transmitter 31 combines the electrical input signals in a diplexer, and the combined electrical signal is converted to an optical signal by a 1.55 μm DFB μm digital laser dc biased above threshold. The optical transmission fiber 32 is a conventional single mode fiber. The optical power splitter can be a 1 x 32 splitter, and the end user optical-to-electrical receivers 35 can comprise PIN diode receivers or APD receivers.

The invention may now be better understood by consideration of the following specific examples and tests. In the examples and tests, which are intended for those skilled in the art, the acronyms used are expanded when they are first used and in the definitions section at the end of this application. The following examples are provided for the purpose of illustration only. The examples should not be construed as limiting the invention.

*Example*

This example is to demonstrate this invention's feasibility. The experimental detail combined with the description above shows advantages of various possible components and methods.

Fig. 6 schematically illustrates the test apparatus wherein a passband signal derived from signals received by satellite dishes 60 and 61 and a baseband signal from a transmitter 62 are electronically combined in diplexer 40. The combined electrical signal is converted to an optical signal by laser transmitter 41, and the resulting optical signal is transmitted over a common fiber 32 to a power splitter 33. An arm of the splitter transmits a portion of the received optical signal to an optical-to-electrical (O/E) receiver 35. The resulting electrical signal is ultimately used to provide video display in a TV 64. Electrical circuitry pertinent to the particular passband signal used and to the tests conducted (but not to actual systems using the invention) will be described in connection with these tests.

To minimize the power budget requirements to approximate power budgets of G.983.1, QPSK modulation of the passband signal was used. QPSK requires the least signal-to-noise ratio (SNR) compared to other higher order quadrature amplitude modulation (M-QAM) or vestigial sideband modulation (VSB). An avalanche photodetector (APD) receiver may allow operation at 16-QAM. Required sensitivity for PIN diode based receivers may need QPSK. The passband RF carriers can be modulated digitally with video, data and audio baseband signals.

For demonstrating transmission of a passband QPSK signal with > 1 Gbps transmission capacity, a signal from the Hughes (Direct TV) Digital Satellite Service (DSS) was used. The DSS signal delivers 150-200 MPEG2/QPSK channels (3-6 Mbps bandwidth per channel depending on the motion content) multiplexed in two orthogonal circular polarizations in the same frequency range of 950 - 1450 MHz after the low noise block converter (LNB) in the 46 cm diameter satellite dish. Each polarization has 16 digital carriers using FDM with ~30 MHz separation and 24 MHz bandwidth per carrier. Each carrier delivers ~ 40 Mbps payload, and thus a total throughput of 1.28 Gbps is delivered. The DSS uses concatenated Reed-Solomon and convolutional forward error correction (FEC) codes for a coding gain of ~ 8 to 9 dBe.

By down-converting one polarity (e.g. the signal from dish 61) from 950-1450 MHz to 270-770 MHz in down converter 65 and multiplexing it with the other polarity in 950-1450 MHz in combiner 66, a digital video signal was built that delivers all of the DSS standard channels within 270-1450 MHz including an unused 770-950 MHz. The range of 270-770 MHz was used in the experimental set up because of commercially available down-converters and up-converters for this frequency range. In the unused RF spectrum, a QPSK modulated rf test-signal centered at 860 MHz was added by transmitter 67. The test-signal was generated with a QPSK satellite modem. A Fireberd 6000A communication analyzer was used for BER tests. A pseudorandom data stream was used with a pattern length of $2^{23}$-1 at a speed of 8 Mbps from the analyzer to the QPSK modem producing a modulated signal centered at 70 MHz which was then up-converted to a frequency of 860 MHz. The QPSK modem allowed turning off of any FEC coding or to apply convolutional coding with a Viterbi decoder with or without Reed - Solomon (R-S) block coding. To keep the overhead bits to a minimum, the transmission was tested with no coding, and 7/8 convolutional coding with or without (110,96) R-S coding. The 8 Mbps data rate with both 7/8 convolutional and (110,96) R-S coding results in a total bit rate of ~ 10.5 Mbps (*i.e.*, 31% overhead) and occupies less than 6 MHz bandwidth with QPSK modulation. This allowed use of 6 MHz standard bandpass filters that are used for analog video channels. The total RF power of the FDM video including the QPSK test-signal at the input to the diplexer was 4.3 dBm or 2.7 mW. When this power drives a 50-Ω load, the peak-to-peak current swing was 21 mA. The multiplexed and modulated signal is converted into an optical signal by laser transmitter 41.

The FDM video passband signal was multiplexed with a 155.52 Mbps pseudorandom NRZ baseband data stream of a pattern length of $2^{23}$-1 through diplexer 40. The peak-to-peak amplitude of the data pulses was 1.5V or 30mA. This stream is equivalent to the time division multiplexed (TDM) baseband signal used in G.983.1, modulated at baseband and will be referred to as the baseband or TDM signal. The baseband and passband signals were multiplexed using diplexer 40. The advantages of using a diplexer instead of a power combiner are negligible cross talk (—60 dBe) between the baseband and passband signals and low insertion loss (~0.5 dBe) for each signal.

The composite baseband TDM and passband FDM signal was then used in E/O transmitter 41 to directly modulate a 1.55 μm DFB digital laser after biasing it with a dc current above its threshold current of 15.5 mA. No thermoelectric cooling of the laser was used. As expected, the measured system performance was found to be very sensitive to the laser bias conditions and the power levels of TDM data and FDM video signals. They affect the extinction ratio, r, for baseband data, and the optical modulation index, m. (Extinction ratio is defined as the ratio of *average* optical powers in the NRZ 1-and 0- bits. The optical modulation index (OMI) is defined as the ratio of the optical modulated signal power and the average optical power for passband.)

The laser bias affects the transmission of both baseband TDM data and passband FDM video signals. Less than optimum bias current reduces the swing between logic 1- and 0- bits, and introduces laser turn on delay and clipping to distort the waveforms. Too much bias current reduces both extinction ratio r and modulation index m for baseband and passband signals, respectively. This reduces SNR and thus impairs the sensitivity of the O/E receiver for both types of signals. Thus, an optimum laser bias is important for optimum system performance.

Based on the laser type and considering the levels of baseband and passband signals, for their simultaneous transmission a bias current of 56 mA was used. For bias >56 mA, the performance of both signals degrades. For bias <56 mA the performance of baseband improves but that of passband degrades. Without passband *i.e.*, for baseband only, the laser bias was reduced to ~45.5 mA for optimum performance. Without baseband *i.e.*, for passband only, the bias current was reduced to 30 mA. At 56 mA, the baseband extinction ratio was 6 dB instead of the desired > 10 dB in ITU-T G.983.1. This results in a 1-dBo optical power penalty in receiver sensitivity given by:

$$\Delta P(dBo) = 10 Log \frac{r+1}{r-1} . \tag{1}$$

The SNR that determines the BER for a RF carrier is related to m and mean square photocurrent ($I_{ph}$) by:

$$SNR = \frac{(mI_{ph})^2}{2B_{eff}(n_{th}^2 + 2qI_{ph} + I_{ph}^2 RIN)} . \tag{2}$$

Here, $B_{eff}$, is the effective carrier bandwidth, $n_{th}$ is the receiver thermal noise current presented to the preamplifier (typically 5 to 10 pA/$\sqrt{Hz}$). RIN is the transmitter relative intensity noise in dB/Hz and q is the electron charge. The first term in the denominator is the thermal noise and the second term is the shot noise of the receiver. For modern DFB lasers, the RIN of the transmitter is insignificant compared to the thermal noise and shot noise. $I_{ph}$ is proportional to the received optical power ($P_{op}$) at the receiver. From (2), gaining or losing 1 dBo optical power is equivalent to gaining or losing 2 dBe in electrical SNR. From (2), m should be as large as possible to increase receiver sensitivity.

The optical signal from the laser was coupled into a passive optical network (PON) that consists of 20-km long conventional single mode fiber 32 and a 1x32 optical power splitter 33. A ~7 dB attenuation was measured through the fiber and a total of ~16 dB insertion loss through the power splitters resulted in a total path loss of 23 dB between the transmitter and the receiver. Using an optical attenuator 68 just before the receiver 35, additional path loss could be introduced to vary the optical input power to the O/E receiver 35.

A Lucent Microelectronics 1319 O/E receiver was used in two versions. One O/E receiver had a PIN diode detector and the other had an APD detector. The receiver is designed to operate at a data rate of 2.5 Gbps. It has a 3 dB bandwidth of 1.6 GHz and is rated for a 2.5 Gbps system sensitivity of ~ -24.5 dBm with PIN diode and ~ —33 dBm with APD at $10^{-10}$ BER. The TDM data and FDM video signals were separated from the output of the receiver 35 using a diplexer 69 identical to the diplexer 40 used to combine these signals at the transmitter side.

The TDM baseband signal was examined for eye diagram and BER. For BER, the TDM signal was amplified and filtered through an SDH filter. The passband signal was studied for (i) SNR on a spectrum analyzer, (ii) live TV reception on a TV set using a DSS set top box 71, and (iii) BER measurement on 860 MHz QPSK test-signal.

For TV reception, the two polarities in 270-770 MHz and 950-1450 MHz bands were separated using another diplexer 72. The 270-770 MHz band was upconverted via block up converter 73 to the original 950-1450 MHz. The signals of two video polarities were then coupled to the DSS set top box 71 (STB) through a switch 74 controlled by the voltage from the STB. Depending upon the 13 or 18 V DC received from the STB, the switch connected the STB to the corresponding polarity. For the bit error rate measurements on the QPSK test-channel, the video signal went through a 6 MHz bandpass filter tuned to 860 MHz center frequency followed by amplification and down-conversion to 70 MHz which was then demodulated and sent to the QPSK modem 67 for bit error rate measurement.

Some subscribers may not be interested in passband services like video. They may like to subscribe to baseband data only and use less expensive baseband only ONU. To study the compatibility with baseband only ONU and to estimate the optical power penalty for using a wide bandwidth receiver for low speed data, a Lucent Microelectronics # 1330 integrated receiver was also used. This is a complete receiver and includes alarm, data and clock recovery circuits. This receiver is optimized for a data rate of 155.52 Mbps. Because of its limited bandwidth, model 1330 could be used only to receive the baseband data with a total loss of video signal.

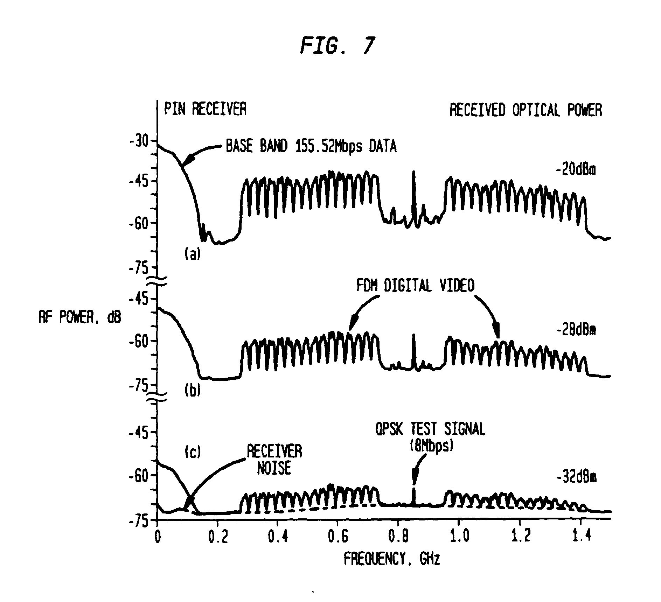

Figs. 7 shows RF spectra of baseband TDM and passband FDM at the output of the PIN diode receiver 1319 for various received optical input powers. Curves 1, 2 and 3 show the spectra for input powers -20, -28 and -32 dBm, respectively. Curve 3 also shows the thermal noise of the receiver that was measured by turning off the optical input power to the receiver because then shot noise and RIN are zero.

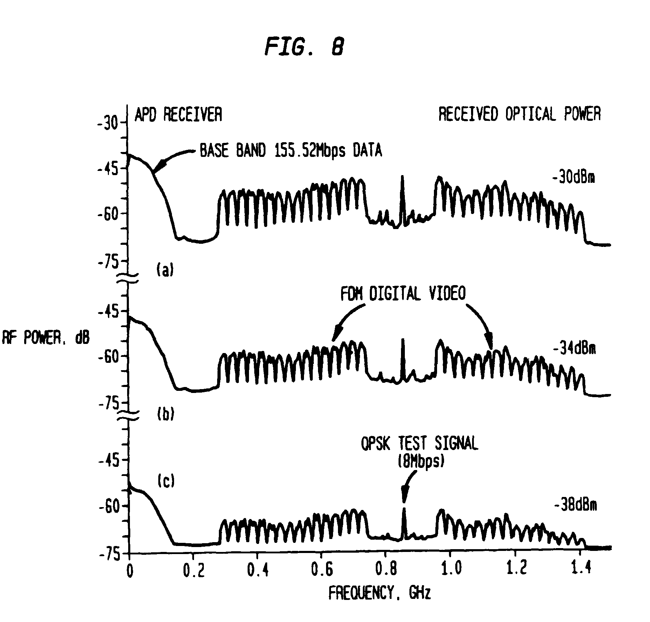

Figure 8 shows the similar RF spectra for the APD receiver for —30, -34 and —38 dBm received optical powers. The spectra at —20 dBm in Fig.7 and at — 30 dBm in Fig. 8 are almost identical to that at the headend and thus our optical system did not introduce any distortion. By viewing the DSS channels on TV, we find that the integrity of the picture is not degraded for the SNR ≥ 6dBe. We attribute this to the FEC used by DSS which gives about 9-dBe gain. For SNR< 6 dBe, there are initially squares or tiles on images followed by a total freeze or loss of the picture as expected from a digital TV signal. All DSS digital carriers < 1GHz had the SNR ~ 6 dBe for $P_{op}$ as small as —32 dBm for PIN diode receiver and —38 dBm for APD receiver. With further reduction of $P_{op}$, the SNRs are degraded by the receiver thermal noise.

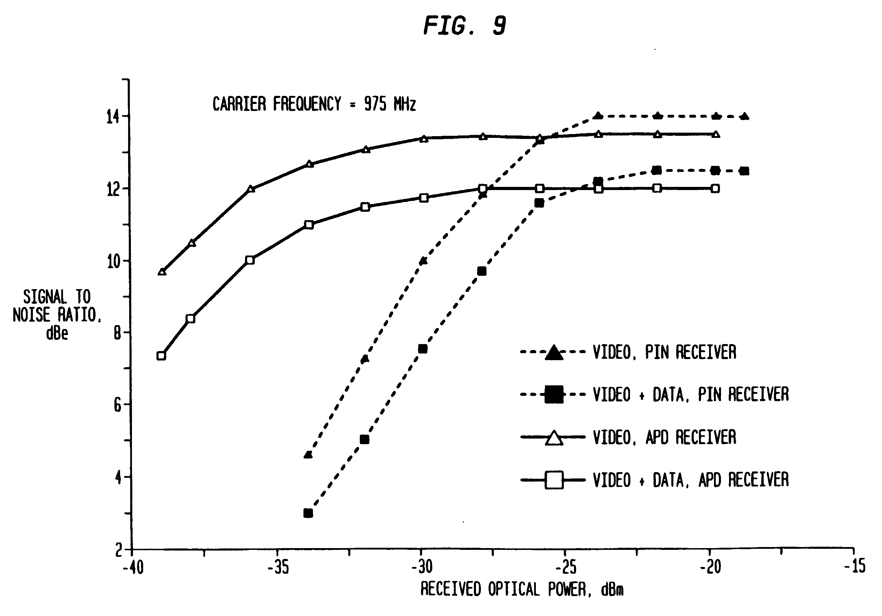

To study the effect of the presence of baseband TDM signal on the SNR of the passband FDM carriers, the SNR of 975 MHz carrier as a function of received optical power is plotted in Fig. 9. Data are presented for both PIN diode and APD based receivers with and without the presence of the TDM data. For the video only transmission (i.e., without baseband data), the laser bias current was reduced from 56 mA to a more optimum value of 30 mA to increase OMI. Figure 9 suggests that there is an optical power penalty of ~2 dBo in video transmission due to the reduction of OMI in presence of baseband TDM data. Nevertheless, with APD receiver we are able to deliver all the video channels with >1 Gbps throughput at class C power level with 5 dB power margin. With PIN diode receiver, system operates in class B mode as defined in G983 with a power margin of 2 dB or 4 dB depending upon if the receiver is considered a 155 or 622 Mbps receiver, respectively.

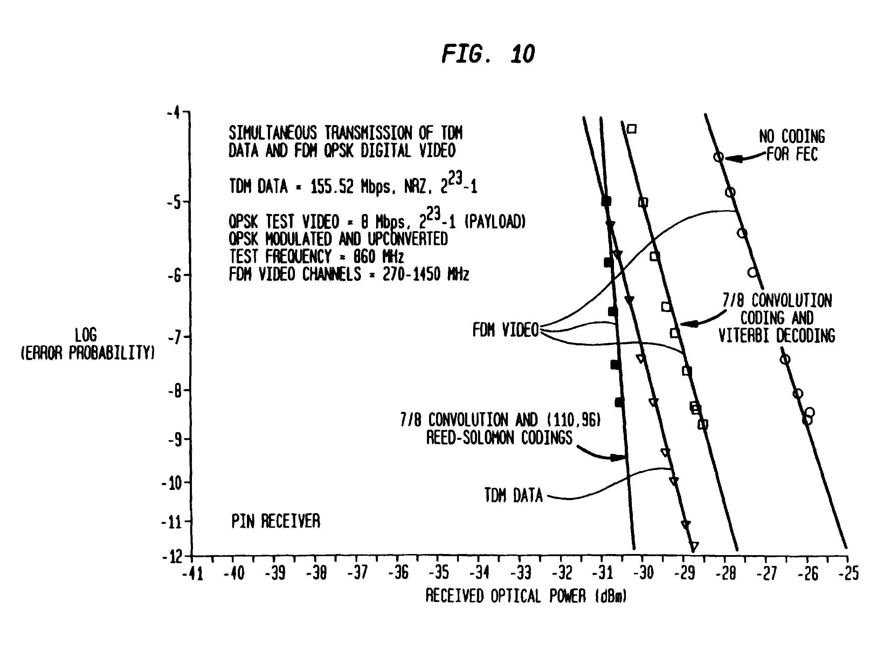

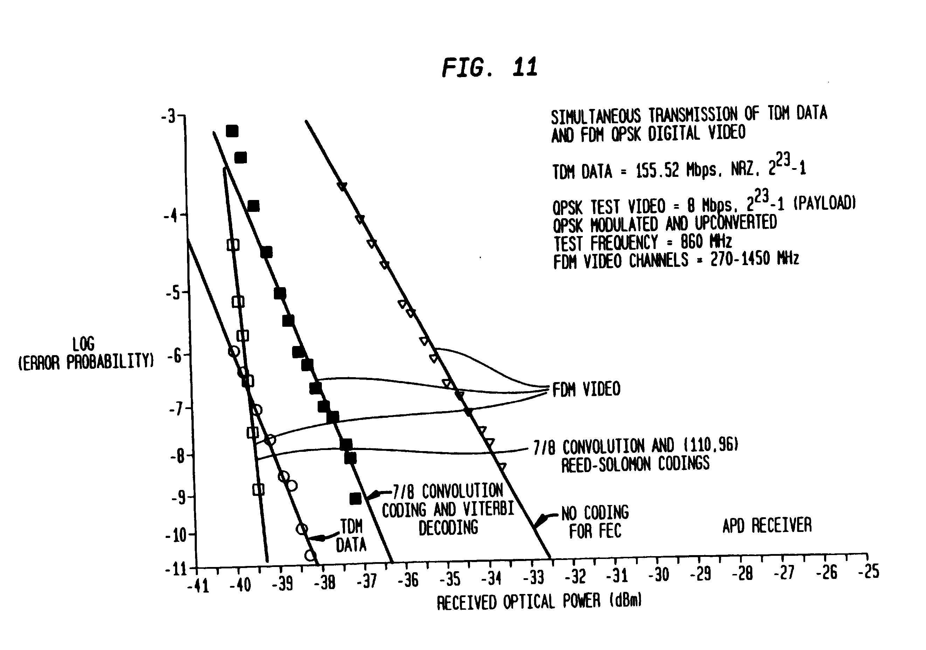

Figs. 10 and 11 show the measured BER as a function of received optical power for the passband FDM and baseband TDM for both PIN diode and APD based receivers, respectively. For the FDM video test-channel, data are plotted with and without FEC coding. For video the sensitivity of APD receiver is 7 to 9dBo greater than of PIN diode receiver. For both receivers, at $10^{-10}$ BER a marked improvement in receiver sensitivity (>2.5 dBo for PIN and >3.5 dBo for APD receiver) is observed when the 7/8 convolutional coding with Viterbi decoder is used. For both receivers, sensitivity improves further by >2.5 dBo with (110,96) Reed-Solomon coding resulting in a total coding gain of >5 dBo for PIN diode receiver and >6 dBo for APD receiver. With both convolution and Reed-Solomon FEC coding, the $10^{-10}$ BER sensitivities are —30.3 dBm and —39.3 dBm for PIN diode and APD receivers, respectively. An APD receiver with a margin of >6 dB for class C can allow the use of 16-QAM instead of QPSK. This will double the transmission bit rate for a given bandwidth in Hertz, or conversely will reduce the receiver bandwidth by 50% in Hertz for a given bit rate and thus increase the receiver sensitivity and power margin further.

For a $10^{-10}$ bit error rate, Figs. 10 and 11 show that for the baseband the sensitivity of PIN diode and APD receivers are -29.5 dBm and —38.5 dBm, respectively. Similar to passband, the system operates in class C with 5.5 dB margin with APD receiver. With PIN diode receiver it operates in class B with 1.5 dB margin if we consider that our system is an upgrade to 622 Mbps otherwise it operates very close to class B for 155 Mbps ONU. For a given receiver, the sensitivity for the baseband can be increased to some extent by reducing the bias current of the transmitting laser at a cost of passband transmission that can be compensated by suitable FEC. As discussed earlier, an APD receiver with 16-QAM in place of QPSK for passband transmission can reduce the required bandwidth of the receiver and thus further increase the receiver sensitivity and the available margin.

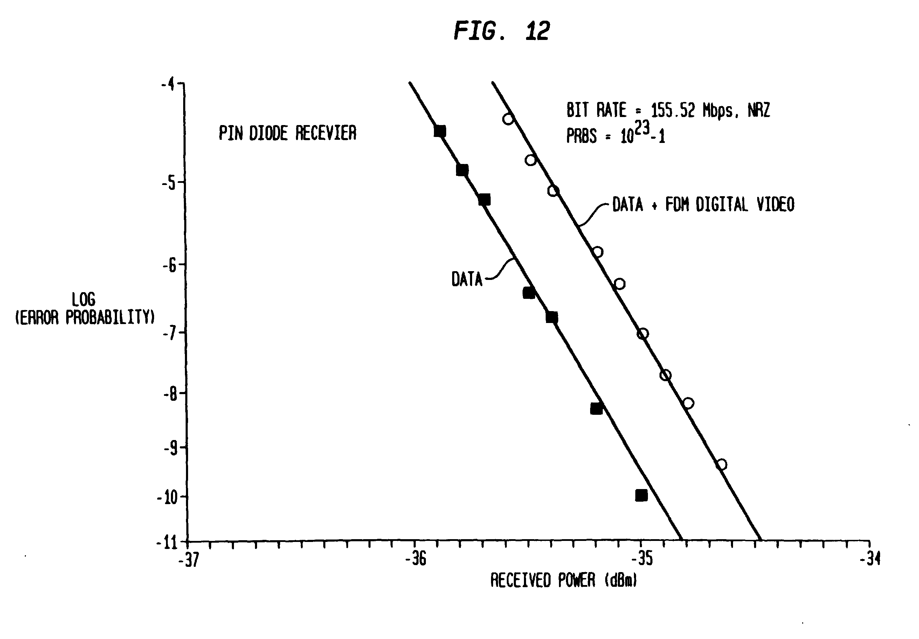

Fig. 12 shows the BER for 1330 receiver that is optimized for 155.52 Mbps. Data are shown with and without passband overlay. However, the passband signal here acted only as a noise on TDM signal because it was totally lost in the filter circuit of 1330 receiver. The laser bias was the same 56 mA and no change was made on the transmitter side. Compared to 1319 receiver, the sensitivity of 1330 receiver is 6 dBo higher due to its optimized bandwidth. Comparing the data with and without passband in Fig. 12, we observe a negligible power penalty (~0.3 dBo) due to the noise or other impairment introduced by the video indicating that the performance of the baseband only ONU is not affected if it receives the baseband data along with passband data. This is because of the optimized bandwidth of this receiver and the decision circuit which rely on the total power in the digital bit '1' or '0' and not on the instantaneous power. With passband overlay, only the instantaneous power changes and not the total or average power in a bit. Thus, the passband overlay is compatible with baseband only receiver with negligible power penalty.

The measured 6 dBo less sensitivity of PIN diode receiver 1319 as compared to receiver #1330 for receiving 155 Mbps baseband data is in agreement of what is expected from its design for high data rate (2,5 Gbps) or wide bandwidth (1.6 GHz). The penalty occurs due to the reduced value of the feedback resistor of the front-end transimpedance amplifier. This penalty can be significantly reduced for an APD receiver due to gain of an APD and its less reliance on the transimpedance amplifier that allows an optimized selection of the feedback resistor.

If the passband bandwidth is reduced from the present 1.6 GHz to 1 GHz or even lower by the use of 16 QAM, thermal noise due to feedback resistor will reduce and the sensitivity of the O/E receiver will increase. RF components for < 1 GHz are available inexpensively due to their wide spread use in CATV, wireless and other industries. Thus, to reduce complexity, cost and the thermal noise related to the feedback resistor, the passband overlay should be limited to <1GHz that would support > 1 Gbps throughput. This of course is easy because even in our experiments a large part of the spectra <1GHz is unused.

The optimization of a PIN diode receiver bandwidth combined with (i) increasing OMI as much as possible, (ii) improving the quality of transmitted signal from the headend, (iii) integrating all receiver components including diplexer on a single board, and (iv) if necessary, increasing the coding rate, will improve the system performance.

An optical to electrical (O/E) receiver 35 using PIN diode satisfies the need for class B operation (- 28 dBm receiver sensitivity) to deliver both baseband and passband services with ~ 1.5 dBo margin if the proposed technique is considered as an upgrade of the baseband 155 Mbps to 622 Mbps. Otherwise it just meets the specifications of class B (-30 dBm receiver sensitivity). However, an APD based receiver satisfies the power budget needs of G.983.1 with ~ 5.5 dBo margin for C operation (*i.e.*, receiver sensitivity <-33 dBm for a $10^{-10}$ bit error rate) for both baseband and passband with forward error correction (7/8 convolution and Reed-Solomon coding) on passband. The available optical power margin with APD receiver is so large that it can also allow use of 16-QAM in place of QPSK for class C and 64-QAM for class B operations. This reduces the required bandwidth of the receiver and thus increase the receiver sensitivity and give necessary power margin. A diplexer is used to separate signals without inserting significant loss.

These tests show that a digitally modulated passband signal can be delivered over the same optical fiber along with a baseband signal using a single transmitter and single receiver. This system can use most existing transmission equipment and baseband transmission power budgets (e.g. ITU-T G.983.1). Approximately 1.5 Gbps transmission rates can be achieved compatible with existing components. This additional bandwidth can be used for broadcast and switched video and for other bandwidth demanding services. It can also be used to provide a dedicated channel of desired bandwidth to any subscriber. The proposed technique also provides a graceful upgrade of currently installed passive optical networks without incurring significant additional costs or power penalty. If some subscribers want to receive baseband data only and no video or any other passband services, the system is compatible with baseband only ONU with negligible power penalty.

| DEFINITIONS | |
|---|---|
| **Acronym** | **Meaning** |
| APD | avalanche photodetector |
| BER | bit error rate |
| DSS | digital satellite service |
| FDM | frequency division multiplexing |
| FEC | forward error correction |
| FTTC | fiber to the curb |
| FTTH | fiber to the home |
| FDM | frequency division multiplexed |
| Gbps | gigabits per second |
| HDTV | high definition television |
| ITU | International Telecommunications Union |
| LNB | low noise block |
| Mbps | megabits per second |
| O/E | optical-to-electrical |
| OMD | optical modulation depth |
| OMI | optical modulation index |
| ONT | optical receiver |
| ONU | optical network unit |
| PON | passive optical network |
| QAM | quadrature amplitude modulation |
| QPSK | quadrature phase shift keying |
| RF | radio frequency |
| R-S coding | Reed-Solomon coding |
| SNR | signal-to-noise ratio |

(continued)

| DEFINITIONS | |
| --- | --- |
| **Acronym** | **Meaning** |
| STB | set top boxes |
| TDM | time division multiplexing |

**Claims**

1. An optical communication system for transmitting both baseband and passband signals on a common optical transmission fiber comprising:

   a source of an electrical baseband signal;

   a source of an electrical passband signal modulated for broadcast services;

   an electrical combiner coupled to the sources for electrically combining the baseband and passband signals,

   a laser transmitter electrically coupled to the electrical combiner for transmitting an optical signal that contains the information of the baseband signal at a rate of at least 155 Mbps and the information of the passband signal;

   an optical transmission fiber optically coupled to the transmitter for carrying the optical signal; and

   at least one optical receiver optically coupled to the transmission fiber for receiving both the baseband and the passband signals.

2. An optical communication system according to claim 1 wherein the electrical combiner comprises a diplexer.

3. An optical communication system according to claim 1 further comprising an optical power splitter optically coupled to the optical transmission fiber for splitting the transmitted optical signal into a plurality of spectrally similar optical signals for distribution to a plurality of end users.

4. An optical communication system according to claim 1 wherein the laser transmitter comprises a semiconductor laser.

5. An optical communication system according to claim 1 wherein the laser transmitter comprises a digital laser.

6. An optical communication system according to claim 1 wherein the laser transmitter comprises a distributed feedback laser.

7. An optical communication system according to claim 1 further comprising an optical receiver optically coupled to the transmission fiber for receiving both the baseband and passband signals.

8. An optical communication system according to claim 6 wherein the optical receiver comprises a PIN diode.

9. An optical communication system according to claim 6 wherein the optical receiver comprises an avalanche photodetector (APD).

10. An optical communication system according to claim 1 wherein the passband signals are M-QAM modulated where $M \geq 4$.

## FIG. 1A

## FIG. 1B

## FIG. 2A

## FIG. 2B

## FIG. 2C

## FIG. 5

FIG. 3

FIG. 4A

FIG. 4C

FIG. 4B

## FIG. 6

EP 1 011 215 A2

- 60
- 61

DSS 18" DISHES

950-1450 MHz

950-1450 MHz

65 — BLOCK DOWN CONVERTER

270-770 MHz

66 — POWER COMBINER

270-1450 MHz

40 — DIPLEXER

41 — E/O XMTR

32

FIBER 20 km

860 MHz | Xmtr

QPSK TEST-CHANNEL BERT ANALYSER 8 Mbps — 67

Rcvr

62 — Xmtr

BERT ANALYZER TDM DATA (155.52 Mbps)

Rcvr

33 — 1x32 SPLITTER

68 — OPTICAL ATTENUATOR

860 MHz

BANDPASS FILTER

DATA

64 — TV

71 — SET TOP BOX

74 — VOLTAGE CONTROLLED SWITCH

950-1,450 MHz

73 — BLOCK UP CONVERTER

270-770 MHz

72 — DIPLEXER

950-1,450 MHz

POWER SPLITTER

VIDEO 270-1,450 MHz

69 — DIPLEXER

35 — O/E RCVR

15

# FIG. 7

PIN RECEIVER                                          RECEIVED OPTICAL POWER

BASE BAND 155.52Mbps DATA

-20dBm

(a)

FDM DIGITAL VIDEO

-28dBm

(b)

QPSK TEST SIGNAL
(8Mbps)

(c)    RECEIVER
       NOISE

-32dBm

RF POWER, dB

FREQUENCY, GHz

## FIG. 8

FIG. 9

FIG. 10

SIMULTANEOUS TRANSMISSION OF TDM
DATA AND FDM QPSK DIGITAL VIDEO

TDM DATA = 155.52 Mbps, NRZ, $2^{23}$-1

QPSK TEST VIDEO = 8 Mbps, $2^{23}$-1 (PAYLOAD)
QPSK MODULATED AND UPCONVERTED
TEST FREQUENCY = 860 MHz
FDM VIDEO CHANNELS = 270-1450 MHz

NO CODING
FOR FEC

FDM VIDEO

7/8 CONVOLUTION
CODING AND
VITERBI DECODING

7/8 CONVOLUTION AND (110,96)
REED-SOLOMON CODINGS

TDM DATA

PIN RECEIVER

LOG
(ERROR PROBABILITY)

-4
-5
-6
-7
-8
-9
-10
-11
-12

-41 -40 -39 -38 -37 -36 -35 -34 -33 -32 -31 -30 -29 -28 -27 -26 -25

RECEIVED OPTICAL POWER (dBm)

EP 1 011 215 A2

19

## FIG. 11

SIMULTANEOUS TRANSMISSION OF TDM DATA
AND FDM QPSK DIGITAL VIDEO

TDM DATA = 155.52 Mbps, NRZ, $2^{23}$-1

QPSK TEST VIDEO = 8 Mbps, $2^{23}$-1 (PAYLOAD)
QPSK MODULATED AND UPCONVERTED
TEST FREQUENCY = 860 MHz
FDM VIDEO CHANNELS = 270-1450 MHz

LOG
(ERROR PROBABILITY)

FDM VIDEO

7/8 CONVOLUTION AND (110,96)
REED-SOLOMON CODINGS

7/8 CONVOLUTION
CODING AND VITERBI
DECODING

NO CODING
FOR FEC

TDM
DATA

APD RECEIVER

RECEIVED OPTICAL POWER (dBm)

EP 1 011 215 A2

FIG. 12

PIN DIODE RECEVIER

BIT RATE = 155.52 Mbps, NRZ
PRBS = $10^{23}$-1

DATA + FDM DIGITAL VIDEO

DATA

LOG
(ERROR PROBABILITY)

RECEIVED POWER (dBm)

EP 1 011 215 A2